Europäisches Patentamt

European Patent Office

Office européen des brevets

(19)

(11) Veröffentlichungsnummer : **0 383 106 B1**

(12) # EUROPÄISCHE PATENTSCHRIFT

(45) Veröffentlichungstag der Patentschrift :
16.06.93 Patentblatt 93/24

(51) Int. Cl.⁵ : **C09C 1/54, B01J 19/00**

(21) Anmeldenummer : **90101984.4**

(22) Anmeldetag : **01.02.90**

(54) **Acetylenruss, ein Verfahren sowie eine Vorrichtung zu seiner Herstellung.**

(30) Priorität : **14.02.89 DE 3904330**

(43) Veröffentlichungstag der Anmeldung :
**22.08.90 Patentblatt 90/34**

(45) Bekanntmachung des Hinweises auf die
Patenterteilung :
**16.06.93 Patentblatt 93/24**

(84) Benannte Vertragsstaaten :
**BE DE FR GB**

(56) Entgegenhaltungen :
FR-A- 1 136 025
GB-A- 2 066 228
US-A- 2 704 242

(73) Patentinhaber : **HOECHST
AKTIENGESELLSCHAFT
Postfach 80 03 20
W-6230 Frankfurt am Main 80 (DE)**

(72) Erfinder : **Kotzian, Michael, Dr.
Sanddornweg 2
W-5042 Erftstadt (DE)**
Erfinder : **Gauss, Michael, Dr.
Schadowstrasse 11
W-6000 Frankfurt (DE)**
Erfinder : **Pottkämper, Siegfried, Dr.
Schaesbergstrasse 11
W-5030 Hürth (DE)**
Erfinder : **Behringer, Hartmut, Dr.
Rotdornweg 6
W-5042 Erftstadt (DE)**
Erfinder : **Heymer, Gero, Dr.
verstorben (DE)**

## Beschreibung

Die Erfindung betrifft Acetylenruß, ein Verfahren sowie eine Vorrichtung zu seiner Herstellung.

Leitfähige Ruße, insbesondere Acetylenruße, werden in steigenden Mengen zur Trockenbatterie-Herstellung benötigt. Hierbei ist der Hersteller der Trockenbatterien auf eine stets gleichbleibende Rußqualität angewiesen, da seine Rezeptur für die Trockenbatterie-Herstellung auf die eingesetzte Rußqualität abgestimmt ist, um eine gute, gleichbleibende Trockenbatterie-Qualität garantieren zu können.

Bei der Beurteilung der Rußqualität für den Einsatz in Trockenbatterien sind die elektrische Leitfähigkeit und die Flüssigkeitsaufnahmefähigkeit besonders wichtige Kriterien. Die Flüssigkeitsaufnahmefähigkeit des Rußes ist ein wichtiger Parameter für die Bereitung der Kathodenmasse für Trockenbatterien. Diese hängt von den Primärteilchen und in besonderer Weise von der Sekundärstruktur, d.h. seiner dreidimensionalen Kettenstruktur ab. Die elektrische Leitfähigkeit des Rußes ist insbesondere an die Ausprägung und Größe der kristallinen Bereiche mit Graphitstruktur gebunden. Ein Maß dafür ist der $L_c$ -Wert, der die mittlere Dicke der kristallinen Bereiche mit Graphitstruktur in Richtung der kristallographischen c-Achse angibt.

In der GB-2 066 228 A wird ein Verfahren und in der GB-2 066 229 A wird eine Vorrichtung zur Herstellung von Acetylenruß beschrieben. Bei der Herstellung von Acetylenruß gemäß dem Stand der Technik kann wegen Ruß-Anbackungen an der Innenwand des Spaltrohres keine zeitlich gleichbleibende Ruß-Qualität erhalten werden. Die Ruß-Anbackungen auf der Innenwand des Spaltrohres werden schließlich so dick, daß zur Reinigung der Innenwand von den Ruß-Anbackungen die Produktion unterbrochen werden muß.

Es war daher die Aufgabe gestellt, einen für die Herstellung von Trockenbatterien geeigneten Acetylenruß zu gewinnen und ein Verfahren sowie eine Vorrichtung zur Herstellung dieses Acetylenrußes in stets gleichbleibender Qualität anzugeben. Produktionsunterbrechungen wegen Ruß-Anbackungen an der Innenwand des Spaltrohres sollen weitgehend verhindert werden.

Gegenstand der Erfindung ist demgemäß ein Acetylenruß mit einem Phosphorgehalt von 0,1 bis 5 ppm, einem Schwefelgehalt von 0,1 bis 5 ppm, einem spezifischen elektrischen Widerstand von 0,45 bis 0,60 $\Omega \cdot$ cm bei einem Druck von 6,3 bar, einem mittleren Teilchendurchmesser von 35 bis 40 nm, einer Dicke der graphitischen Schichtebenenpakete $L_c$ von 4 bis 10 nm, einer Absorptionszahl von 40 bis 47 ml/5 g Ruß, einer Oberfläche gemäß BET-Methode von 40 bis 100 $m^2/g$, insbesondere von 50 bis 75 $m^2/g$, einer "Freien Feuchte" von 550 bis 650 mV nach 5 Minuten Naßmischzeit und von 600 bis 700 mV nach 10 Minuten Naßmischzeit.

Ein weiterer Gegenstand der Erfindung ist ein Verfahren zur Herstellung von Acetylenruß durch thermische Zersetzung von Acetylen, das am Kopf eines Spaltrohres eingeführt wird, das dadurch gekennzeichnet ist, daß man an der Innenwand des Spaltrohres einen Inertgasstrom periodisch von oben nach unten und/oder von unten nach oben vorbeibläst.

Das Verfahren gemäß der Erfindung kann weiterhin wahlweise auch noch dadurch ausgestaltet sein, daß man

a) als Inertgas Stickstoff, Wasserstoff, Edelgas, Kohlenmonoxid, Kohlendioxid oder Gemische dieser Gase verwendet;

b) periodisch 0,1 bis 10 s lang mit einem Inertgasstrom bläst und danach über einen Zeitraum von 0,1 bis 1 h kein Inertgas einbläst;

c) periodisch 0,5 bis 2 s lang mit einem Inertgasstrom bläst und danach über einen Zeitraum von 0,4 bis 0,6 h kein Inertgas einbläst;

d) den Inertgasstrom aus Düsen oder Bohrlöchern bläst und das Gas aus den Düsen oder Bohrlöchern mit einer Geschwindigkeit von 100 bis 300 m/s ausströmt.

Ein weiterer Gegenstand der Erfindung ist eine Vorrichtung zur Herstellung von Acetylenruß in einem Spaltrohr mit oben angeordneter Acetylenzufuhr und einer oder zwei Inertgaszuführungen, die an der Innenwend des Spaltrohres über den gesamten inneren Umfang des Spaltrohres angeordnet sind und Gasaustritte in Form einer Ringschlitzdüse oder von Bohrlöchern haben.

Diese Vorrichtung kann auch noch wahlweise dadurch ausgebildet sein, daß

e) eine Inertgaszuführung unterhalb des Deckels angeordnet ist und die Gasaustritte parallel zur Innenwand des Spaltrohres nach unten geöffnet sind;

f) eine Inertgaszuführung im Abstand von 0,5 bis 1,5 m unterhalb des Deckels angeordnet ist und die Gasaustritte parallel zur Innenwand des Spaltrohres nach oben geöffnet sind;

g) eine Inertgaszuführung unterhalb des Deckels angeordnet ist und diese Gasaustritte parallel zur Innenwand des Spaltrohres nach unten geöffnet sind und eine zweite Inertgaszuführung im Abstand von 0,5 bis 1,5 m unterhalb des Deckels angeordnet ist und diese Gasaustritte parallel zur Innenwand des Spaltrohres nach oben geöffnet sind;

h) die offene Gasaustrittsfläche 50 bis 1000 $mm^2$ pro m Inertgaszuführung beträgt;

i) die offene Gasaustrittsfläche aus Bohrlöchern mit 1 bis 5 mm Durchmesser besteht und die einzelnen Bohrlöcher einen Abstand von 2 bis 50 mm haben;
Die Charakterisierung des Acetylenrußes erfolgt nach folgenden Vorschriften:

1) Mittlerer Teilchendurchmesser

Der mittlere Teilchendurchmesser wird mit Hilfe des Elektronenmikroskops bestimmt.

2) Spezifischer elektrischer Widerstand

Der Ruß wird ohne eine weitere Vorbehandlung in ein nichtleitendes zylindrisches Rohr eingefüllt, das am unteren Ende mit einem vergoldeten, metallischen Stöpsel verschlossen ist. Dieser Stöpsel stellt die eine Elektrode dar. Auf den Ruß wird ein vergoldeter Metallzylinder als zweite Elektrode gelegt. Der Zylinder wird so belastet, daß ein Druck von 6,3 bar auf der Unterseite des Zylinders ansteht. Die Höhe der Rußsäule soll 1,5 cm betragen. Der elektrische Widerstand der Rußsäule wird mit einer Wheatstone'schen Brückenschaltung nach der Gleichung

$$\varphi = R \frac{F}{l}$$

berechnet, worin $\varphi$ für den spezifischen Widerstand in $\Omega \cdot cm$, R für den Widerstand in $\Omega$, F für den Querschnitt der Rußsäule in $cm^2$ und l für die Höhe der Rußsäule in cm stehen.

3) Absorptionszahl (AS-Zahl)

Die AS-Zahl gibt diejenige Menge eines Wasser/Aceton-Gemisches (9 : 1) in $cm^3$ an, die erforderlich ist, um in einem Rundkolben aus 5 g Ruß eine einzige Kugel zu formen.

4) Freie Feuchte nach 5 und 10 minütiger Naßmischzeit

Bei der Herstellung der Kathodenmasse, z.B. aus 168 g Ruß, 1400 g Naturbraunstein, 360 g $NH_4Cl$, 20 g ZnO und 575 g 23,5 gewichtsprozentiger $ZnCl_2$-Lösung, in einem Planetenrührwerk wird die Sekundärstruktur des Rußes durch die mechanische Beanspruchung im Mischer teilweise zerstört bzw. verändert. Als Maß für die verbleibende Flüssigkeitsaufnahmefähigkeit nach 5 und 10 min Naßmischzeit wird die "Freie Feuchte" herangezogen. Diese Größe ist die Spannung in mV, die über einen $10\Omega$ Fixwiderstand zwischen einer Zinkplatte und 4 g der zu messenden Kathodenmasse auf einer Fläche von 5,4 $cm^2$ und unter dem Druck eines 8 kg schweren Gewichtes gemessen wird. Je höher die Absorptionszahl und je stabiler die Rußstruktur ist, umso weniger Feuchtigkeit wird durch das Anode und Kathode trennende Fließpapier gedrückt und umso niedriger ist die "Freie Feuchte".

5) $L_c$-Wert

Der $L_c$-Wert wird aus den Ergebnissen einer Röntgendiffraktometer-Aufnahme mit $CuK_\alpha$-Strahlung berechnet.

$$L_c = \frac{K}{\cos \ominus_m \cdot \ominus_{1/2}} nm$$

In den beigefügten Zeichnungen ist eine Vorrichtung zur Herstellung von Acetylenruß schematisch im Schnitt dargestellt, und zwar zeigt:

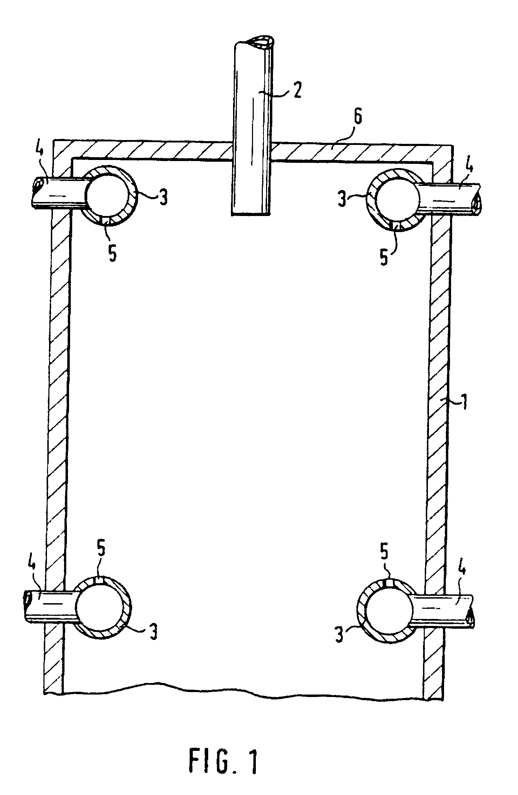

Figur 1 :     einen Schnitt durch die Mittelachse des Spaltrohres,

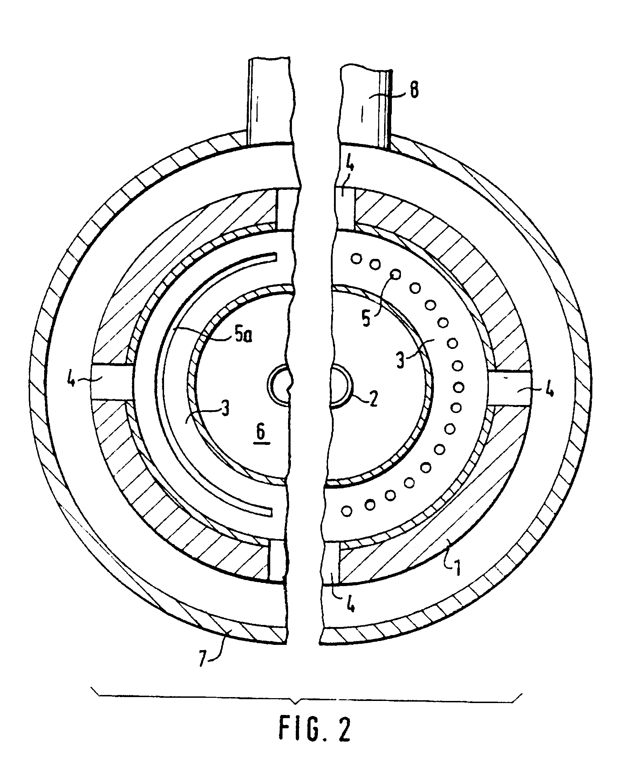

Figur 2:      eine Draufsicht auf das Spaltrohr,
Figur 3:      einen Schnitt durch die obere Spaltrohrwand mit Inertgaszuführung.
Die erfindungsgemäße Vorrichtung wird anhand der Zeichnungen erläutert:
Die Inertgaszuführung besteht aus dem Druckrohr 7 mit dem Inertgasstutzen 8, den Verteilerrohren 4 und der Ringschlitzdüse 3 mit dem Ringschlitz 5a oder dem Lochkranz 3 mit den Bohrungen 5. Die Inertgaszuführung ist nahe der Innenwand des Spaltrohres 1 angeordnet. Das Spaltrohr 1 ist oben verschlossen von dem Deckel 6, der seinerseits von der Acetylenzufuhr 2 durchdrungen ist.

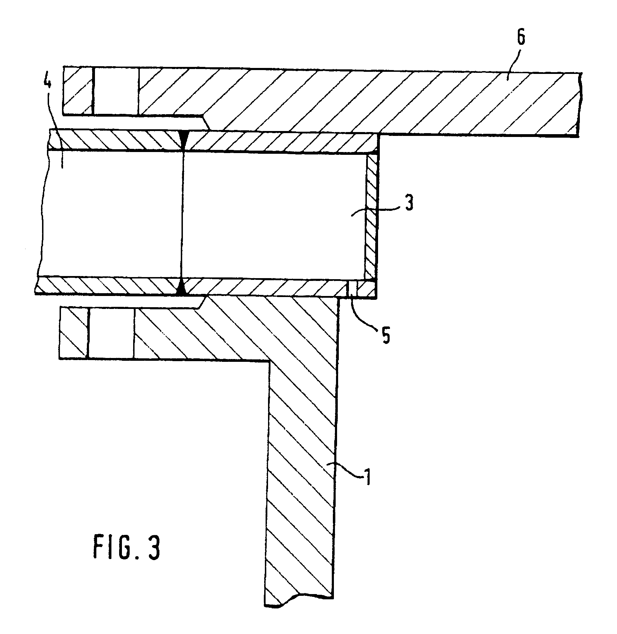

In Figur 3 ist ein Schnitt durch eine besonders günstige Anordnung der Inertgaszuführung gezeigt. Anstelle des gezeichneten Lochkranzes 3 mit den Bohrungen 5 kann durch Einfräsen eines Ringspaltes 5a eine Ringschlitzdüse 3 als Inertgaszuführung ausgebildet sein.

Beispiel

Über die Acetylenzufuhr werden 50 Nm³/h Acetylen in das heiße Spaltrohr eingeführt. Über eine Inertgaszuführung wird periodisch Stickstoff eingeblasen. Die Inertgaszuführung ist gemäß der Figur 3 als Lochkranz mit Bohrungen ausgeführt. Der Durchmesser des Lochkranzes beträgt 840 mm. Der Lochkranz besteht aus 145 im Abstand von 15 mm angeordneten Bohrungen mit je 3,15 mm Durchmesser. Aus der Gesamtfläche der Bohrungen errechnet sich ein freier Querschnitt von 1130 mm². Die periodische Blasephase der Stickstoffeinführung beträgt 1 s.

Die Blasephase wird unterbrochen von einer 0,5 h dauernden Ruhepause, in der kein Stickstoff eingeblasen wird.

Der produzierte Acetylenruß hatte folgende Parameter, die sich über einen Zeitraum von 6 Wochen nur unwesentlich veränderten:

```
elektrischer Widerstand (6,3 bar):    0,51  Ω  · cm

mittlerer Teilchendurchmesser:          36   nm

Absorptionszahl:                        45   ml/5 g Ruß

L -Wert:                                 7   nm
 c
BET-Oberfläche:                         55   m²/g

Freie Feuchte (5 min):                 590   mV

Freie Feuchte (10 min):                630   mV

Phosphorgehalt:                          3   ppm

Schwefelgehalt:                          2   ppm
```

Die Innenwand des Spaltrohres war nach 6 Wochen nur mit geringen Ruß-Anbackungen belegt. Diese geringen Ruß-Anbackungen waren kein Grund für eine Innenwandinspektion des Spaltrohres oder dessen Reinigung.

**Patentansprüche**

1. Acetylenruß mit einem Phosphorgehalt von 0,1 bis 5 ppm, einem Schwefelgehalt von 0,1 bis 5 ppm, einem spezifischen elektrischen Widerstand von 0,45 bis 0,60 $\Omega$ · cm bei einem Druck von 6,3 bar, einem mittleren Teilchendurchmesser von 35 bis 40 nm, einer Dicke der graphitischen Schichtebenenpakete $L_c$ von 4 bis 10 nm, einer Absorptionszahl von 40 bis 47 ml/5 g Ruß, einer Oberfläche gemäß BET-Methode von 40 bis 100 m²/g, einer "Freien Feuchte" von 550 bis 650 mV nach 5 Minuten Naßmischzeit und von 600 bis 700 mV nach 10 Minuten Naßmischzeit.

2. Acetylenruß nach Anspruch 1 mit einer Oberfläche gemäß BET-Methode von 50 bis 75 m²/g.

3. Verfahren zur Herstellung von Acetylenruß durch thermische Zersetzung von Acetylen, das am Kopf eines Spaltrohres eingeführt wird, dadurch gekennzeichnet, daß man an der Innenwand des Spaltrohres einen Inertgasstrom periodisch von oben nach unten und/oder von unten nach oben vorbeibläst.

4. Verfahren nach Anspruch 3, dadurch gekennzeichnet, daß man als Inertgas Stickstoff, Wasserstoff, Edelgas, Kohlenmonoxid, Kohlendioxid oder Gemische dieser Gase verwendet.

5. Verfahren nach Anspruch 3 oder 4, dadurch gekennzeichnet, daß man periodisch 0,1 bis 10 s lang mit einem Inertgasstrom bläst und danach über einen Zeitraum von 0,1 bis 1 h kein Inertgas einbläst.

6. Verfahren nach einem der Ansprüche 3 bis 5, dadurch gekennzeichnet, daß man periodisch 0,5 bis 2 s lang mit einem Inertgasstrom bläst und danach über einen Zeitraum von 0,4 bis 0,6 h kein Inertgas einbläst.

7. Verfahren nach einem der Ansprüche 3 bis 6, dadurch gekennzeichnet, daß man den Inertgasstrom aus Düsen oder Bohrlöchern bläst und das Gas aus den Düsen oder Bohrlöchern mit einer Geschwindigkeit von 100 bis 300 m/s ausströmt.

8. Vorrichtung zur Herstellung von Acetylenruß in einem Spaltrohr (1) mit oben angeordneter Acetylenzufuhr (2) und einer oder zwei Inertgaszuführungen (4), die an der Innenwand des Spaltrohres (1) über den gesamten inneren Umfang des Spaltrohres (1) angeordnet sind und Gasaustritte in Form einer Ringschlitzdüse (5a) oder von Bohrlöchern (5) haben.

9. Vorrichtung nach Anspruch 8, dadurch gekennzeichnet, daß eine Inertgaszuführung unterhalb des Deckels (6) angeordnet ist und die Gasaustritte parallel zur Innenwand des Spaltrohres nach unten geöffnet sind.

10. Vorrichtung nach Anspruch 8, dadurch gekennzeichnet, daß eine Inertgaszuführung im Abstand von 0,5 bis 1,5 m unterhalb des Deckels (6) angeordnet ist und die Gasaustritte parallel zur Innenwand des Spaltrohres nach oben geöffnet sind.

11. Vorrichtung nach Anspruch 8, dadurch gekennzeichnet, daß eine Inertgaszuführung unterhalb des Deckels (6) angeordnet ist und diese Gasaustritte parallel zur Innenwand des Spaltrohres nach unten geöffnet sind und eine zweite Inertgaszuführung im Abstand von 0,5 bis 1,5 m unterhalb des Deckels (6) angeordnet ist und diese Gasaustritte parallel zur Innenwand des Spaltrohres nach oben geöffnet sind.

12. Vorrichtung nach einem der Ansprüche 8 bis 11, dadurch gekennzeichnet, daß die offene Gasaustrittsfläche 50 bis 1000 mm² pro m Inertgaszuführung beträgt.

13. Vorrichtung nach einem der Ansprüche 8 bis 12, dadurch gekennzeichnet, daß die offene Gasaustrittsfläche aus Bohrlöchern (5) mit 1 bis 5 mm Durchmesser besteht und die einzelnen Bohrlöcher (5) einen Abstand von 2 bis 50 mm haben.

## Claims

1. An acetylene black having a phosphorus content of from 0.1 to 5 ppm, a sulfur content of from 0.1 to 5 ppm, a specific electrical resistance of from 0.45 to 0.60 $\Omega$.cm at a pressure of 6.3 bar, a mean particle diameter of from 35 to 40 nm, a thickness of the graphite layer plane packs $L_c$ of from 4 to 10 nm, an absorption number of from 40 to 47 nm/5 g of black, a surface area by the BET method of from 40 to 100 m²/g, and a "free moisture" of from 550 to 650 mV after a wet-mixing time of 5 minutes and of from 600 to 700 mV after a wet-mixing time of 10 minutes.

2. The acetylene black as claimed in claim 1, having a BET surface area of from 50 to 75 m²/g.

3. A process for preparing acetylene black by the thermal decomposition of acetylene introduced at the top of a cracking tube, which comprises periodically blowing a stream of inert gas along the inner surface of the cracking tube in the downward and/or upward direction.

4. The process as claimed in claim 3, wherein the inert gas used is nitrogen, hydrogen, noble gas, carbon monoxide, carbon dioxide or a mixture thereof.

5. The process as claimed in claim 3 or 4, wherein a stream of inert gas is introduced periodically for from 0.1 to 10 s and thereafter no inert gas is introduced for a period of from 0.1 to 1 h.

6. The process as claimed in any of claims 3 to 5, wherein a stream of inert gas is introduced periodically for from 0.5 to 2 s and thereafter no inert gas is introduced for a period of from 0.4 to 0.6 h.

7. The process as claimed in any of claims 3 to 6, wherein the stream of inert gas is introduced through nozzles or drilled holes at a velocity of from 100 to 300 m/s.

8. Apparatus for preparing acetylene black in a cracking tube (1) with an acetylene supply at the top (2) and one or two inert gas supply points (4), which are arranged along the inner surface of the cracking tube (1) over the entire inner circumference of the cracking tube (1) and have gas outlets in the form of an annular nozzle (5a) or of drilled holes (5).

9. Apparatus as claimed in claim 8, wherein an inert gas feed point is arranged underneath the lid (6) and the gas outlets open out downward parallel to the inner surface of the cracking tube.

10. Apparatus as claimed in claim 8, wherein an inert gas feed point is arranged at a distance of from 0.5 to 1.5 m underneath the lid (6) and the gas outlets open out upward parallel to the inner surface of the cracking tube.

11. Apparatus as claimed in claim 8, wherein an inert gas feed point is arranged underneath the lid (6) and these gas outlets open out downward parallel to the inner surface of the cracking tube and a second inert gas feed point is arranged at a distance of from 0.5 to 1.5 m underneath the lid (6) and these gas outlets open out upward parallel to the inner surface of the cracking tube.

12. Apparatus as claimed in any of claims 8 to 11, wherein the free gas outlet area is from 50 to 1000 mm² per m of inert gas feed.

13. Apparatus as claimed in any of claims 8 to 12, wherein the free gas outlet area comprises drilled holes (5) of from 1 to 5 mm in diameter and the distance between the individual drilled holes (5) is from 2 to 50 mm.

**Revendications**

1. Noir d'acétylène ayant une teneur en phosphore de 0,1 à 5 ppm, une teneur en soufre de 0,1 à 5 ppm, une résistivité électrique de 0,45 à 0,60 Ω.cm sous une pression de 6,3 bar, un diamètre moyen de particules de 35 à 40 nm, un épaisseur de rangées de plans de stratification graphitiques, $L_c$ de 4 à 10 nm, un indice d'absorption de 40 à 47 ml/5 g de noir de fumée, une surface spécifique selon la méthode BET de 40 à 100 m²/g, une "humidité libre" de 550 à 650 mV après un temps de mélange au mouillé de 5 min et de 600 à 700 mV après un temps de mélange au mouillé de 10 min.

2. Noir d'acétylène selon la revendication 1, ayant une surface spécifique selon la méthode BET de 50 à 75 m²/g.

3. Procédé pour la fabrication de noir d'acétylène par décomposition thermique d'acétylène, qui est envoyé en tête d'un tube de dissociation, caractérisé en ce que l'on fait passer périodiquement devant la paroi interne du tube de dissociation un courant de gaz inerte de haut en bas et/ou de bas en haut.

4. Procédé selon la revendication 3, caractérisé au choix en ce que l'on utilise comme gaz inerte l'azote, l'hydrogène, un gaz rare, le monoxyde de carbone, le dioxyde de carbone ou des mélanges de ces gaz.

5. Procédé selon la revendication 3 ou 4, caractérisé en ce que l'on injecte périodiquement un courant de gaz inerte pendant 0,1 à 10 s et ensuite on n'injecte pas de gaz inerte pendant une durée de 0,1 à 1 h.

6. Procédé selon l'une des revendications 3 à 5, caractérisé en ce que l'on injecte périodiquement un courant de gaz inerte pendant 0,5 à 2 s et ensuite on n'injecte pas de gaz inerte pendant une durée de 0,4 à 0,6 h.

7. Procédé selon l'une des revendications 3 à 6, caractérisé en ce que l'on injecte le courant de gaz inerte par les buses ou les trous et le gaz sort des buses ou des trous à une vitesse de 100 à 300 m/s.

8. Installation pour la fabrication de noir d'acétylène dans un tube de dissociation (1) comportant dans le haut une arrivée d'acétylène (v) et présentant une ou deux arrivées de gaz inerte (4) qui sont disposées sur la paroi interne du tube de dissociation (1) sur tout le périmètre intérieur du tube de dissociation (1) et des sorties de gaz (5a) sous forme d'une buse annulaire ou de trous (5).

9. Installation selon la revendication 8, caractérisée en ce qu'une arrivée de gaz inerte est disposée sous le couvercle (6) et les sorties de gaz sont ouvertes vers le bas parallèlement à la paroi interne du tube de dissociation.

10. Installation selon la revendication 8, caractérisée en ce qu'une arrivée de gaz inerte est disposée à une distance de 0,5 à 1,5 m sous le couvercle (6) et les sorties de gaz sont ouvertes vers le haut parallèlement à la paroi interne du tube de dissociation.

11. Installation selon la revendication 8, caractérisée en ce qu'une arrivée de gaz inerte est disposée au-dessous du couvercle (6) et ces sorties de gaz sont ouvertes vers le bas parallèlement à la paroi interne du tube de dissociation et une seconde arrivée de gaz inerte est disposée à une distance de 0,5 à 1,5 m au-dessous du couvercle (6) et ces sorties de gaz sont ouvertes vers le haut parallèlement à la paroi interne du tube de dissociation.

12. Installation selon l'une des revendications 8 à 11, caractérisée en ce que la surface libre de la sortie de gaz est de 50 à 1 000 mm$^2$ par mètre de l'arrivée de gaz inerte.

13. Installation selon l'une des revendications 8 à 12, caractérisée en ce la surface libre de la sortie de gaz consiste en trous (5) de 1 à 5 mm de diamètre et les trous (5) sont espacés de 2 à 50 mm.

FIG. 1

FIG. 2

FIG. 3